# EUROPÄISCHE PATENTSCHRIFT

(11) **EP 2 117 345 B1**
(45) Veröffentlichungstag und Bekanntmachung des Hinweises auf die Patenterteilung: **06.09.2017**
(21) Anmeldenummer: 07845278.6
(22) Anmeldetag: 05.12.2007
(51) Int. Cl.: A23K 30/15

(54) **VERFAHREN ZUR SILIERUNG**
METHOD FOR SILAGING
PROCÉDÉ D'ENSILAGE

(30) Priorität: 05.12.2006 AT 20162006
(43) Veröffentlichungstag der Anmeldung: 18.11.2009
(73) Patentinhaber: Zuckerforschung Tulln Gesellschaft M.B.H., 3430 Tulln (AT)
(72) Erfinder: HEIN, Walter, 1190 Wien (AT); EMERSTORFER, Florian, 1030 Wien (AT)
(74) Vertreter: Sonn & Partner Patentanwälte
(86) Internationale Anmeldenummer: PCT/AT2007/000549
(87) Internationale Veröffentlichungsnummer: WO 2008/067578

(56) Entgegenhaltungen:
- WO-A-02/39825
- WO-A-03/097079
- WO-A-2004/026041
- WO-A-2005/089104
- GB-A- 2 330 076
- US-A- 4 564 524
- BEUCHAT L R ET AL: "ANTIMICROBIALS OCCURRING NATURALLY IN FOODS" FOOD TECHNOLOGY, INSTITUTE OF FOOD TECHNOLOGISTS, CHICAGO, IL, US, Bd. 43, Nr. 1, Januar 1989 (1989-01), Seiten 134-142, XP000025938 ISSN: 0015-6639
- LARSON A E ET AL: "Antimicrobial activity of hop extracts against Listeria monocytogenes in media and in food" INTERNATIONAL JOURNAL OF FOOD MICROBIOLOGY, ELSEVIER SCIENCE PUBLISHERS, AMSTERDAM, NL, Bd. 33, 1996, Seiten 195-207, XP002467699 ISSN: 0168-1605

## Beschreibung

Die vorliegende Erfindung betrifft Verfahren zur Silierung und Konservierung von pflanzlichen Rohstoffen.

In der Landwirtschaft werden bei der Herstellung von Silagen Silierhilfsmittel eingesetzt um unerwünschte Mikroorganismen an ihrer Entwicklung zu behindern, auf diese Weise den mikrobiologischen Stoffabbau und den Verlust an Nährstoffen einzuschränken und damit die Futterqualität zu erhalten. Als Folge eines wesentlich verbesserten Konservierungserfolges beim Einsatz von Silierhilfsmitteln kann außerdem mit einer Verbesserung der Futteraufnahme, der Verdaulichkeit und des Nährstoff- und Energiegehaltes und damit einer potenziellen Steigerung der tierischen Leistungen gerechnet werden. Ein bedeutsames Risiko bei der Bereitung von Silagen und dem Konservierungserfolg besteht im Falle von Fehlgärungen. Diese Fehlgärungen werden vor allem von Hefen und Bakterien verursacht. Bei den Bakterien sind vor allem Clostridien von Bedeutung. Folgen schlechter Gärqualität der Silage äußern sich in hohem Schadkeimgehalt, Eiweißzersetzung, Buttersäurebildung und Nährstoffverlusten. Zur Unterbindung von Fehlgärungen gibt es verschiedenste Produktgruppen, die als Silierhilfsmittel eingesetzt werden. Derartige Silierhilfsmittel sind Siliersalze, Siliersäuren sowie Bakterienpräparate mit lebenden Milchsäurebakterien. Diese Wirkstoffe bzw. Mischungen haben nun den Zweck, über eine Absenkung des pH-Wertes Milchsäurebakterien einen Wachstumsvorteil im Wettbewerb um den zur Verfügung stehenden Zucker gegenüber Gärschädlingen zu verschaffen. Milchsäurebakterien, wie *Lactobacillen, Pediococcen, Enterococcen* usw., sind zumeist in ausreichender Zahl bereits im zu vergärenden Rohstoff (Gras, Mais, Pressschnitzel etc.) enthalten, können aber bei unvorteilhaften Bedingungen (geringer Trockenmassegehalt des Siliergutes, Mangel an vergärbaren Zuckern etc.) durch zusätzliche Beimpfung beim Anstellen (bei Fermentationsbeginn) eingebracht werden.

Um eine optimale Wirkung einzelner Produkte oder Produktkombinationen zu erzielen, ist nicht zuletzt auch die Einbringungsart und die erzielte Verteilung im Gut von großer Bedeutung. Neben der pH-Wert-Absenkung weisen manche Wirkstoffe unter den Siliersäuren (z.B. Propionsäure, Sorbinsäure) auch bakterizide Effekte auf.

Siliersäuren und Siliersalze entfalten ihre Hemmwirkung gegenüber unerwünschten Mikroorganismen primär über eine Absenkung des pH-Wertes und seltener über direkte bakterizide Effekte. Diese pH-Wert-Absenkung begünstigt das Wachstum von Milchsäurebakterien, welche den vorhandenen Zucker verwerten und im Zuge ihres Wachstums über die Freisetzung von Milchsäure, Essigsäure und andere Stoffwechselprodukte den pH-Wert weiter absenken. Auf diese Weise ist es Gärschädlingen, die gegen tiefe pH-Werte sehr empfindlich sind, wesentlich erschwert sich im Siliergut zu vermehren und als Konkurrenten bei der Zuckerverwertung aufzutreten. Weitere Silierhilfsmittel, die zur Bekämpfung insbesondere von Colibakterien, Mikrokokken, Clostridien und Listerien eingesetzt werden, sind Präparate auf Nitritbasis. Siliertes Pflanzenmaterial, welches mit derartigen Präparaten versetzt wurde, kann aufgrund der Toxizität nicht direkt als Futtermittel eingesetzt werden und muss vor Verfütterung ca. 1 Monat gelagert werden, bis schließlich der Nitritgehalt eine Konzentration erreicht, die nicht mehr schädlich ist.

Ein Überblick über Silierverfahren wird im "Praxishandbuch Futterkonservierung. Silagebereitung, Siliermittel, Dosiergeräte, Silofolien" (DLG-Verlags-GmbH, 7. Auflage 2006, ISBN 3-7690-0677-1) gegeben.

WO 2005/089104 A betrifft ein Verfahren zur Beeinflussung der mikrobiellen Zusammensetzung im Gastrointestinaltrakt von Wiederkäuern, indem diesen Tieren Hopfensäuren verabreicht werden, beispielsweise in Form von Futterbeimischungen. Ferner wird erwähnt, dass die Hopfensäuren vor der Fütterung mit einer Silage vermischt werden können.

WO 2004/026041 A betrifft die Verwendung von Hopfensäuren, insbesondere von Humulon und Lupulon, als Futterzusatzmittel für tierisches Futter, wodurch es ermöglicht wird, das Wachstum von Bakterien im Pansen- und Darmbereich von Wiederkäuen zu kontrollieren.

In WO 02/39825 A wird ein Verfahren zur Silierung von pflanzlichen Rohstoffen und Silierhilfsmittel für ein derartiges Verfahren geoffenbart, in welchem Bakterien, insbesondere Milchsäurebakterien, zur Inokulation einer Silage verwendet werden.

Beuchat L R et al in "Antimicrobials Occuring Naturally In Food", Food Technology, Institute of Food Technologists, Chicago, Bd. 43, Nr. 1, Januar 1989, Seiten 134-142 betrifft antimikrobielle Stoffe, die in natürlicher Weise in Lebensmitteln vorkommen. Dabei werden Fettsäuren als antimikrobielle Stoffe beschrieben, wobei festgehalten wird, dass "Gram-negative bacteria appear to be less susceptible than Gram-positive bacteria to inhibition by fatty acids" und bezüglich Hopfensäuren offenbart wird, dass "Gram-negative bacteria and [...] are less sensitive to the effects of humulones and lupulones than are Gram-positive bacteria".

In WO 03/097079 A wird ein Verfahren zur Herstellung einer β-Hopfensäurelösung geoffenbart, welche Lösung geeignet ist, bakterielles Wachstum zu kontrollieren. Dabei wird beschrieben, dass Hopfensäuren vor allem dazu geeignet sind Gram-positive Bakterien zu bekämpfen.

In GB 2 330 076 A wird die Verwendung von Hopfenextrakten zur Bekämpfung von Clostridien geoffenbart und die Wirksamkeit von Hopfensäuren gegenüber Gram-positiven Bakterien diskutiert. Dabei werden einige Literaturstellen zitiert, aus denen hervorgeht, dass Hopfensäuren beispielsweise gegen Listerien, Streptokokken und insbesondere gegen Clostridien wirksam sind. Ferner wird auch angeführt, dass Hopfensäuren gegenüber Lactobacillus brevis wirksam ist, wobei die Wirksamkeit vom pH-Wert abzuhängen scheint.

In Larson A et al "Antimicrobial activity of hop extracts against Listeria monocytogenes in media and in food", International Journal of Food Microbiology, Elsevier, Amsterdam, Bd. 33, 1996, Seiten 195-207 wird die antimikrobielle Aktivität von Hopfenextrakten gegenüber Listerien in einem Kulturmedium und in Lebensmitteln untersucht.

Die Herstellung von hochwertigem siliertem Futtermittel ist in der Landwirtschaft von entscheidender Bedeutung. Es ist insbesondere für die Qualität von Milch und Fleisch wichtig die Tiere mit Futtermittel hoher Qualität zu versorgen. Um die Silierung zu steuern werden zumeist Silierhilfsmittel, insbesondere Siliersäuren, eingesetzt. Diese sorgen in der Regel dafür, dass der pH-Wert in der Silage auf ein Niveau gebracht wird, bei dem sich beispielsweise Milchsäurebakterien optimal vermehren können, und in der Silage nicht erwünschte Organismen im Wachstum gehemmt werden. Diese Hilfsmittel haben jedoch teilweise auch auf das Wachstum von in der Silage erwünschten Bakterien einen negativen Einfluss. Ferner ist es mit dem Einsatz derartiger Mittel nicht möglich im Silierungsprozess unerwünschte Mikroorganismen (wie z.B. Clostridien) gezielt zu hemmen ohne das Wachstum erwünschter Mikroorganismen (z.B. Milchsäurebakterien) im Wesentlichen nicht zu beeinflussen bzw. zu fördern.

Daher ist es Aufgabe der vorliegenden Erfindung Silierhilfsmittel zur Verfügung zu stellen, die insbesondere eine erhöhte Wirksamkeit gegenüber Mikroorganismen aufweisen, die in der Silage nicht erwünscht sind, und vorteilhafterweise das Wachstum der für eine Silage erforderlichen Mikroorganismen nicht beeinflussen bzw. deren Wachstum fördern.

Die vorliegende Erfindung betrifft somit ein Verfahren zur Silierung und Konservierung von pflanzlichen Rohstoffen und Rohstoffgemischen, wobei die Silierung und Konservierung zumindest teilweise in Anwesenheit von mindestens einer zugesetzten organischen Säure und/oder deren Salz, Alkohol und Aldehyd durchgeführt wird, wobei die organische Säure ausgewählt ist aus der Gruppe bestehend aus Harzsäuren und Hopfensäuren.

Die vorliegende Erfindung stellt Mittel zur Unterstützung der konservierenden Prozesse während der Herstellung hochqualitativer Silagen zur Verfütterung an Nutztiere zur Verfügung. Insbesondere ermöglicht dieses Verfahren die Silagequalität mindernden oder für Nutztiere pathogenen Mikroorganismen in der Silageherstellung zu unterdrücken. Einerseits auf dem Wege diese unerwünschten Mikroorganismen direkt über die Wirkstoffe zu bekämpfen und andererseits sie soweit in ihrer Aktivität einzuschränken, dass es zu einer verstärkten Vermehrung weniger wirkstoffempfindlicher Mikroorganismen kommen kann, welche die erforderlichen konservierenden pH-Verhältnisse über die Bildung von Milchsäure schaffen.

Es hat sich überraschend herausgestellt, dass mit Hilfe des Einsatzes von Harz- und/oder Hopfensäuren silierte bzw. konservierte und zum Teil vergorene pflanzliche Rohstoffe bzw. Rohstoffgemische in kontrollierter, verbesserter Weise hergestellt werden können. Diese organischen Säuren können entweder vor oder während der aeroben Phase im Silierprozess (vor der Hauptgärphase, bei der die pflanzenhaltigen Rohstoffe luftdicht abgeschlossen, verdichtet und gelagert werden) hinzugegeben werden. Die erfindungsgemäß eingesetzten Stoffe bewirken dabei eine selektive Unterdrückung vornehmlich bakterieller Gärschädlinge. Es hat sich erfindungsgemäß gezeigt, dass die Bekämpfung der Mikroorganismen direkt über die Wirkstoffe bereits am Beginn der Silierung möglich ist, da beispielsweise Hopfen-β-Säuren bei einem pH-Wert von 5 bis 7 (Hopfen-α-Säuren bei einem pH-Wert von 2,5 bis 5) die beste Wirksamkeit aufweisen - das stellt einen grundlegenden Unterschied zu anderen organischen Säuren und Salzen davon dar, wo eine relativ große Menge zugesetzt werden muss, um den pH-Wert ausreichend abzusenken und schließlich zu gewährleisten, dass die undissozierten Säuren mikrobizid wirksam werden können. Im Gegensatz dazu können Hopfensäuren und Harzsäuren bei einer geringeren der zuzusetzenden Konzentration eingesetzt werden (im niedrigen mg/kg Bereich). Aufgrund des höheren pH-Optimums von Hopfen-β-Säuren (siehe oben) und aufgrund der Verwendung von Hopfen-α-Säuren in der Bierherstellung und Hefeproduktion sind Hopfen-α-Säuren weniger verfügbar, so dass besonders Hopfen-β-Säuren bevorzugt eingesetzt werden.

Erfindungsgemäß wird im Verfahren zumindest eine organische Säure eingesetzt. Selbstverständlich ist es auch möglich, Kombinationen von organischen Säuren (zumindest zwei, drei, vier, fünf oder zehn Säuren) und anderen Substanzen vorzusehen. Die erfindungsgemäßen Säuren ermöglichen jedenfalls die kontrollierte Silierung von pflanzlichen Rohstoffen, da diese gezielt gegen Mikroorganismen wirksam sind, die im Silierungsprozess unerwünscht sind.

Gemäß der vorliegenden Erfindung ist die organische Säure ausgewählt aus der Gruppe bestehend aus Harzsäuren und Hopfensäuren.

Erfindungsgemäß eignet sich jede Harzsäure und jede Hopfensäure dazu, um als Hilfsmittel bei der Silierung und Konservierung von pflanzlichen Rohstoffen eingesetzt zu werden, vorausgesetzt diese ist in der Lage, das Wachstum von in einer Silage nicht erwünschten Mikroorganismen signifikant zu beeinträchtigen.

Inhaltsstoffe der unbefruchteten Blütenstände weiblicher Hopfenpflanzen, die so genannten Hopfensäuren, weisen bakterizide Eigenschaften auf. Diese bitter schmeckenden Hopfenbestandteile werden seit Jahrhunderten zur Herstellung von lagerfähigem Bier genutzt und haben somit sogar in die menschliche Ernährung Eingang gefunden. Vor diesem Hintergrund kann von einer gesundheitlichen Unbedenklichkeit für Tiere bei Aufnahme geringster Mengen mit der Nahrung ausgegangen werden.

Die Hopfenpflanze *Humulus lupulus* gehört zur botanischen Familie der *Cannabiaceae;* Hopfen wird in vielen Ländern kultiviert und bei der Herstellung von Bier verwendet. Unbefruchtete weibliche Hopfenpflanzen bilden die so genannten Hopfendolden, in denen das Hopfenharz vorliegt. Das Hopfenharz wiederum enthält verschiedenste bakterizid wirksame Substanzen. Die Hopfenbestandteile können mit Hilfe von Ethanol oder überkritischem CO₂ extrahiert werden.

Die aus dem Hopfenharz gewinnbaren Hopfenbitterstoffe beinhalten verschiedene Fraktionen, wie Humulone (alpha-Säuren) und Lupulone (beta-Säuren). Diese Substanzen weisen mikrobiologische Hemmwirkung auf und können durch Erhitzen in ihre Isoformen überführt werden, wodurch bessere Wasserlöslichkeit bei nach wie vor vorhandener Hemmwirkung auf Mikroorganismen gegeben ist.

Beispiele von geeigneten Hopfensäuren finden sich in der US 2003/015480. Neben isolierten Hopfensäuren können bei der Silierung erfindungsgemäß auch Hopfenextrakte verwendet werden.

Gemäß einer bevorzugten Ausführungsform der vorliegenden Erfindung wird die Silierung und Konservierung zusätzlich in Anwesenheit von zumindest einer Fettsäure durchgeführt, wobei diese vorzugsweise ungesättigt bzw. gesättigt ist.

Da es sich bei vielen Fettsäure-Verbindungen um physiologisch unbedenkliche Naturprodukte handelt, eignen sich diese insbesondere um im erfindungsgemäßen Verfahren eingesetzt zu werden. Die Fettsäure-Verbindungen gemäß der vorliegenden Erfindung können auch Fettsäurealkohole oder Fettsäurealdehyde sein. Die Fettsäure-Verbindungen können dabei auch modifiziert, etwa durch den Einbau von funktionellen Gruppen, wie-OH,-SH,-NH₂,-F,-Cl,-Br,-I u. dgl. sein (ausgenommen solche Derivate, die toxisch oder lebensmitteltechnisch nicht anwendbar sind); auch aliphatische Seitenketten und/oder ein oder mehrere (insbesondere zwei oder drei) (ungesättigte) Doppelbindungen sind möglich, solange die physiko-chemischen Eigenschaften der (aliphatischen) Grundkette, insbesondere die Löslichkeit in antimikrobiellen Konzentrationen, sowie die Struktur am Cl-Atom erhalten bleiben.

Die Möglichkeit einer keimhemmenden Wirkung von Fettsäuren ist zwar für manche Gebiete bekannt oder in der Vergangenheit postuliert worden, jedoch haben sich diese Fettsäuren in der Praxis als Desinfektionsmittel für Mischkulturen, wie sie beispielsweise in einer Silage vorkommen, nicht bewährt.

Es zeigt sich auch, dass sich die postulierte keimhemmende Wirkung von Fettsäure-Verbindungen im Laufe der Zeit als nicht belegbar herausgestellt hat und zum gegenwärtigen Zeitpunkt nicht mehr als gegeben oder gar industriell nutzbar erachtet wird: Während in der 3. Auflage von Ullmanns Enzyklopädie der technischen Chemie (1954, Bd. 5, Desinfektion und Sterilisation, S. 753) noch über Fettsäuren als Desinfektionsmittel referiert wird (in den 40er Jahren war man relativ optimistisch in Bezug auf die desinfizierende Wirkung von Fettsäuren in der Medizin), ist dieses Kapitel in der 4. Auflage (1975, Bd. 10, S.47-48) im Kapitel "Desinfektionsmittel" stark gekürzt ("Das Wirkungsmaximum von Fettsäuren soll bei C11 bis C12 liegen..." bzw. "Über die Bakterizidie der Seifen liegen stark widersprechende Befunde vor....") und in der 5. Auflage (1987, Vol. A8) wird im Kapitel "Disinfectants" nicht mehr darüber berichtet. Daraus ist ersichtlich, dass es bei normalen Temperaturen zu viele Fettsäureunempfindliche Mikroorganismenstämme gibt und dass man Fettsäuren heute nicht mehr zu den Desinfektionsmitteln zählt. Um so überraschender war es, dass sich gerade bei einem Verfahren zur Silierung bzw. Konservierung von Pflanzen-haltigen Rohstoffen besonders gut organische Säure, wie Fettsäuren bzw. Fettsäure-verbindungen, eignet. Dabei kommt den Fettsäuren besondere Bedeutung zu, da diese als technischer Hilfsstoff auch dazu dienen können, beispielsweise die Löslichkeit etwaig dazugegebener Harzsäuren zu erhöhen. Daher können im erfindungsgemäßen Verfahren Fettsäuren und/oder deren Salz, Alkohol und Aldehyd eingesetzt werden, um die Löslichkeit der Harzsäuren zu erhöhen ("Lösungsvermittler", insbesondere bei niederen Temperaturen).

Gemäß einer bevorzugten Ausführungsform ist die Fettsäure ausgewählt aus der Gruppe bestehend aus Kaprinsäure, Undecylensäure, Laurinsäure, Myristinsäure, Palmitinsäure, Margarinsäure, Stearinsäure, Arachinsäure, Behensäure, Lignocerinsäure, Cerotinsäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure und Cervonsäure, wobei sich aber insbesondere die Myristinsäure als geeignetes Silierhilfsmittel herausgestellt hat.

Die Myristinsäure bzw.-seife hat sich erfindungsgemäß besonders bewährt, vor allem was ihre Eigenschaft anbelangt, die Löslichkeit von Harzsäuren zu verbessern. Ferner dient Myristinsäure auch zur Verbesserung der Lagerfähigkeit der Harzsäuren (bei kühleren Temperaturen, z.B., kommt es zur teilweisen Bildung von Niederschlägen) und als Silierungs- und Konservierungsmittel (oberhalb des Schmelzpunktes von ∼54-55°C). In einigen Fällen können zwar auch Myristinester antimikrobielle Wirkung zeigen, wobei jedoch nur Methylmyristat, nicht jedoch Ethyl- und Propylmyristat, mit einer Hemmkonzentration von ungefähr 100 mg/mL als äquivalent zu den erfindungsgemäßen Verbindungen angesehen werden kann.

Die Harzsäure ist vorzugsweise ausgewählt aus der Gruppe bestehend aus Pimarsäure, Neoabietinsäure, Abietinsäure, Levopimarsäure und Palustrinsäure.

Die Harzsäuren können erfindungsgemäß als von weiteren Harzbestandteilen isolierte Säuren zugesetzt werden, oder aber in Form eines Harzes oder Harzextraktes, vorzugsweise eines natürlichen Harzes, noch mehr bevorzugt in Form von Kolophonium.

Baumharze von Pinien/Kiefern beispielsweise sowie das daraus durch Destillation gewonnene Kolophonium, welches zum größten Teil aus Harzsäuren besteht, weisen bakterizide Eigenschaften auf, welche für die menschliche Ernährung bereits seit Jahrhunderten genutzt werden. Eine gesundheitliche Gefährdung von Nutztieren durch Nahrungsaufnahme kann somit ausgeschlossen werden.

Vorzugsweise werden die Harzsäuren bzw. das Harz aus Kiefern gewonnen. Kiefern, wie die österreichische Schwarzföhre *Pinus nigra Austriaca,* gehören zur botanischen Familie der Kieferngewächse oder *Pinaceae;* sie sind vornehmlich auf der Nordhalbkugel weit verbreitet und ihre Harze haben bei der Herstellung von Retsina, dem griechischen geharzten Wein, eine lange Tradition. Zur Gewinnung der antibakteriell wirksamen Bestandteile wird das Kiefernharz mittels Destillation in die beiden Fraktionen Terpentinöl und Kolophonium aufgetrennt. Im Kolophonium liegen nun die wirksamen Bestandteile, ein Gemisch aus Harzsäuren, vor. Diese können mit Alkalien zu Alkali-Resinaten gelöst werden.

Kolophonium ist ein Gemisch aus aromatischen Verbindungen wie Abietinsäure, Dehydroabietinsäure und deren Isomere. Diese so genannten Harzsäuren, welche in Form von festen Kolophoniumblöcken kommerziell erwerbbar sind, entfalten zu unterschiedlichen Graden antibakterielle Aktivität und können als wasserlösliche Alkali-Resinate eingesetzt werden. Zur Erhöhung der Löslichkeit und Verhinderung der Niederschlagsbildung der Harzseife bei der Lagerung ist es günstig Myristinsäure zu geringen Anteilen als technischen Hilfsstoff bereits bei der Herstellung beizugeben.

Erfindungsgemäß können sämtliche lebensmittelkompatiblen Harze, wie sie beispielsweise in "Ullmann's Encyclopedia of Industrial Chemistry", Vol. A 23 (1993), Seiten 73-88, beschrieben sind, eingesetzt werden, wie beispielsweise Baumharze, insbesondere Balsame, wie z.B. Benzoe, Kiefernbalsam, Myrrhe und Tolubalsam. Aus Gründen der Wirtschaftlichkeit werden erfindungsgemäß vor allem Kolophonium-Produkte und Derivate bevorzugt. Derartige Produkte sind beispielsweise in Ullmann's Encyclopedia of Industrial Chemistry, Vol. A 23 (1993), auf den Seiten 79-88 (hierin durch Bezugnahme ausdrücklich eingeschlossen) beschrieben.

Bevorzugterweise werden erfindungsgemäß vor allem die ebendort beschriebenen Kolophonium(-Präparate) oder Kolophoniumderivate als natürliche Harze eingesetzt. Vorzugsweise wird dabei ein gelostes, emulgiertes bzw. dispergiertes oder pastöses Kiefernharzprodukt eingesetzt, vorzugsweise auf Basis von Kiefernharz, Kiefernbalsam, Kiefernharzsäuren, Salzen der Kiefernharzsäuren (Harzseifen), nicht-denaturierten Derivaten von Kiefernharzen (i. e. Derivate, die ohne Einfluss von starken Säuren oder Basen erhalten werden), eingesetzt. Als Kolophoniumderivate werden erfindungsgemäß auch chemisch-synthetisierte oder aus Kolophoniumprodukten isolierte Einzelkomponenten des Kolophoniums verstanden, wie beispielsweise Levopimarsäure, Neoabietinsäure, Palustrinsäure, Abietinsäure, Dehydroabietinsäure, Tetrahydroabietinsäure, Dihydroabietinsäure, Pimarsäure und Isopimarsäure. Die Derivatisierung von Kolophonium kann weiters die Hydrierung, Polymerisierung, Additionsreaktionen, Veresterung, Nitrilierung, Aminierung, etc. vorsehen.

Die Hopfensäure ist somit vorzugsweise eine alpha-Hopfensäure, die ausgewählt ist aus der Gruppe bestehend aus Humulon, Isohumulon, Cohumulon, Adhumulon, Prähumulon, Posthumulon, Tetrahydroisohumulon und Tetrahydrodeoxyhumulon, oder eine beta-Hopfensäure, die ausgewählt ist aus der Gruppe bestehend aus Lupulon, Colupulon, Adlupulon, Prälupulon, Postlupulon, Hexahydrocolupulon und Hexahydrolupulon.

Gemäß einer bevorzugten Ausführungsform der vorliegenden Erfindung wird die zumindest eine Hopfensäure (α- oder β-Hopfensäure) in Form eines Hopfenextrakts zugesetzt.

Gemäß einer bevorzugten Ausführungsform der vorliegenden Erfindung wird die Harzsäure und/oder Fettsäure als salzhaltige Lösung oder Suspension zugesetzt, vorzugsweise als Kaliumsalzlösung, insbesondere als 0,5 bis 35%ige Kaliumsalzlösung, oder als Natriumsalzlösung, insbesondere als 0,5 bis 35%ige Natriumsalzlösung. Besonders bevorzugt ist die Verwendung einer Kaliumsalzlösung.

Diese Mengenverhältnisse beziehen sich nicht nur auf die freien Säuren, sondern auch auf Extrakte und Harze, die diese Säuren umfassen.

Gemäß einer weiteren bevorzugten Ausführungsform wird die organische Säure als alkoholische Lösung oder Suspension, vorzugsweise als eine 1 bis 95%ige, insbesondere als eine 10 bis 80%ige Ethanollösung, zugesetzt.

Vor und/oder während dem Silieren und Konservieren wird vorzugsweise zumindest ein zuckerhaltiges Substrat zugesetzt.

Mit der Zugabe von leicht vergärbaren Kohlenhydratquellen, wie z.B. Melasse, wird den in den zu silierenden Rohstoffen befindlichen Mikroorganismen das für die Fermentation notwendige Substrat zur Verfügung gestellt. Dadurch kann beispielsweise mehr Säure, insbesondere Milchsäure, gebildet werden, was sich auf die weitere Abnahme und die Hemmung von Gärschädlingen auswirkt.

Das zuckerhaltige Substrat ist vorzugsweise ausgewählt aus der Gruppe bestehend aus Melasse, Dicksaft, Dünnsaft, Zuckerrübenschnitzel und Kombinationen davon.

Insbesondere diese Kohlenhydratquellen stellen den Mikroorganismen einerseits leicht vergärbare Zucker zur Verfügung und sind andererseits als Neben- und Zwischenprodukte im Rahmen der industriellen Zuckerherstellung in großen Mengen und günstig erhältlich. Der Zusatz von z.B. Melasse führt zu einer erhöhten Menge an Milchsäure, Gärsäuren allgemein, einem niedrigeren pH-Wert, einem reduzierten Buttersäuregehalt und zu einer verbesserten Stabilität des hergestellten Produkts.

Das zuckerhaltige Substrat wird dem pflanzlichen Rohstoff oder Rohstoffgemisch vorzugsweise in einer Menge von 0,1% bis 10%, vorzugsweise in einer Menge von 0,5% bis 8%, noch mehr bevorzugt in einer Menge von 1% bis 6%, zugesetzt.

Es hat sich in der Praxis herausgestellt, dass insbesondere im hier angeführten Konzentrationsbereich eine effiziente Silierung und somit Konservierung von pflanzlichen Rohstoffen erfolgen kann. Die im erfindungsgemäßen Verfahren eingesetzten Mengen hängen insbesondere auch davon ab, wie der Rohstoff selbst vergärbar ist.

Gemäß einer bevorzugten Ausführungsform der vorliegenden Erfindung wird die mindestens eine organische Säure und/oder deren Salz, Alkohol und Aldehyd dem pflanzlichen Rohstoff oder Rohstoffgemisch in einer Menge von 0,001% bis 2%, vorzugsweise in einer Menge von 0,005% bis 1%, noch mehr bevorzugt in einer Menge von 0,01% bis 0,5%, zugesetzt.

Die Silierung und Konservierung wird.vorzugsweise zumindest teilweise in Anwesenheit mindestens eines weiteren antimikrobiellen Wirkstoffs und/oder Stabilisators durchgeführt.

Der Einsatz von weiteren antimikrobiellen Wirkstoffen erlaubt eine weitergehende Hemmung von unerwünschten Gärkeimen zur Unterstützung der ohnehin bereits eingesetzten erfindungsgemäßen organischen Säuren. Erfindungsgemäß eignen sich alle im Stand der Technik bekannten antimikrobiellen Wirkstoffe, die auch in Futtermitteln und Nahrungsmitteln regelmäßig und unbedenklich eingesetzt werden können (z.B. Benzoate, Natriumnirit, Hexamethylentramin usw.).

Weitere Zusatzstoffe, die erfindungsgemäß eingesetzt werden können, sind Rohfaser-spaltende Enzyme (z.B. Cellulasen, Hemicellulasen, Xylanasen), Stärke (als zusätzliche Kohlenstoffquelle), Zucker und Mineral- und Spurenelemente.

Vorzugsweise eingesetzte antimikrobielle Wirkstoffe und Stabilisatoren sind ausgewählt aus der Gruppe bestehend aus Essigsäure, Propionsäure, Benzoesäure, Sorbinsäure, Ameisensäure und deren Salzen.

Gemäß einer bevorzugten Ausführungsform der vorliegenden Erfindung wird die Silierung und Konservierung zumindest teilweise in Anwesenheit von zugesetzten Mikroorganismen, vorzugsweise prokaryotischen Mikroorganismen, insbesondere von Milchsäurebakterien, durchgeführt. Dabei werden bevorzugt Lactobacillus plantarum, Pediococcus acidilactici, Enterococcus faecium, Lactobacillus buchneri und Pediococcus pentosaceus eingesetzt.

Durch den Zusatz von z.B. Milchsäurebakterien (homo- und heterofermentative Bakterien) kann der Gärungsverlauf an sich gesteuert werden. Homofermentative Milchsäurebakterien beschleunigen zu Beginn der Silierung die Bildung von Milchsäure und tragen somit zu einer rascheren Senkung des pH-Werts bei. Heterofermentative Milchsäurebakterien, die in der Lage sind neben Milchsäure auch Essigsäure zu bilden, senken ebenfalls den pH-Wert und sind insbesondere aufgrund der Essigsäurebildung für die Hemmung von Hefen verantwortlich. Darüber hinaus besitzen heterofermentative Milchsäurebakterien, wie *Lactobacillus* buchneri, die Fähigkeit Milchsäure nach Verbrauch der Zucker als Kohlenstoffquelle zu verwerten und sie zu Essigsäure umzubauen, wodurch eine zusätzliche Absenkung des pH-Werts und eine verbesserte aerobe Stabilität erreicht werden. Erfindungsgemäß wird die Verwendung von Milchsäurebakterien bevorzugt, die im Wesentlichen resistent gegen Hopfensäuren und/oder Harzsäuren sind.

Ein gemeinsamer Einsatz von z.B. hopfenresistenten Milchsäurebakterien (die z.B. aus Bierbrauereien isoliert werden können) und Hopfeninhaltsstoffen erlaubt es die Einsatzkonzentration des Biostabilisators anzuheben, wodurch gärschädliche Keime effektiver unterdrückt werden können, indem einerseits selektive Substanzen auf Gärschädlinge einwirken, andererseits aber die rasche Vergärung der Zucker durch hopfenresistente Stämme wie z.B. Lactobacillen gewährleistet ist. Auf diese Weise kann ein synergistischer Effekt bestehend aus der Anwendung der Biostabilisatoren und von speziellen biologischen Starterkulturen genutzt werden.

Als hopfenresistente Milchsäurebakterien werden vorzugsweise Lactobacillus brevis, Lactobacillus paracasei und/oder Pediococcus damnosus eingesetzt.

Mit dem erfindungsgemäßen Verfahren können pflanzliche Rohstoffe jeglicher Art siliert und konserviert werden. Insbesondere sind die Rohstoffe ausgewählt aus der Gruppe bestehend aus Getreide, vorzugsweise Roggen, Weizen und Mais, Leguminosen, Gras, Zuckerrüben, Früchten, vorzugsweise Traubentrester, Schlempe, Pressschnitzel, Treber, Maische und Teilen und Kombinationen davon.

Im Hinblick auf das große Spektrum an Rohmaterialien (Gras, Mais, Pressschnitzel, Schlempe der Bier- bzw. Ethanol- und Spirituosenherstellung usw.) und ihren jeweiligen Eigenschaften, was Trockensubstanz, Art der Keimbelastung, Gehalt an vergärbaren Zuckern usw. betrifft, ist es für die Bereitung von Silagen, von Vorteil, gegebenenfalls den kombinierten Einsatz der beschriebenen Substanzen mit anderen Silierzusätzen, wie Salzen und/oder Säuren, in Erwägung zu ziehen. Darüber hinaus kann es notwendig sein, ein Substrat für die Milchsäuregärung im Siliergut über die Zugabe von Melasse oder anderer Zuckerquellen bereitzustellen. Auch die Zugabe von Starterkulturen (meist *Lactobacillen*) bei zu geringen Ausgangskeimzahlen der erwünschten Milchsäurebakterien ist möglich.

Ein weiterer Aspekt der vorliegenden Erfindung betrifft einen silierten und konservierten pflanzlichen Rohstoff bzw. ein entsprechendes Rohstoffgemisch erhältlich nach dem erfindungsgemäßen Verfahren.

Mit Hilfe des erfindungsgemäßen Verfahrens ist es möglich pflanzliche Rohstoffe derart aufzubereiten, dass u.a. Futtermittel hergestellt werden können, die eine verbesserte Lagerfähigkeit aufweisen (längere Lagerdauer möglich), zu einer verbesserten Verdaubarkeit des Futtermittels in den gefütterten Tieren führen und keine das Tier belastenden Stoffe aufweisen, da die im hierin beschriebenen Verfahren eingesetzten organischen Säuren lebensmittelrechtlich unbedenklich sind. Aufgrund der erhöhten Wirksamkeit der erfindungsgemäßen Silierhilfsmittel gegen z.B. Clostridien und Listerien kommt es aufgrund eines erhöhten Selektiondrucks zur vermehrten Bildung gewünschter Milchsäurebakterien, da diese weniger empfindlich gegenüber den Wirkstoffen sind als die unerwünschten Keime.

Noch ein weiterer Aspekt der vorliegenden Erfindung betrifft somit ein Futtermittel, umfassend silierten und konservierten pflanzlichen Rohstoff oder ein Rohstoffgemisch gemäß der vorliegenden Erfindung.

Insbesondere werden erfindungsgemäß organische Säuren eingesetzt, die aufgrund ihrer Eigenschaften kein Gesundheitsrisiko für Nutztiere, die mit siliertem Futter gefüttert werden, darstellen. Viele Studien belegen die Unbedenklichkeit natürlicher Biostabilisatoren (wie z.B. Harzsäuren, Fettsäuren und Hopfensäuren) zumal sie sogar in der menschlichen Ernährung Verwendung finden. Vor diesem Hintergund zieht eine möglicherweise auftretende Verschleppung kleinster Substanzmengen in Bereiche der menschlichen Ernährung keine gesundheitliche Gefährdung nach sich. Daher stellen die erfindungsgemäßen Säuren eine optimale Alternative oder Ergänzung zu bisher verwendeten Silierhilfsmitteln, wie Konservierungsmittel (z.B. Benzoate), die bekannterweise über das Futtermittel in die menschliche Nahrungskette gelangen können, dar.

Die vorliegende Erfindung wird weiters durch die folgenden Beispiele dargelegt, ohne jedoch auf diese beschränkt zu sein.

### BEISPIELE:

Die folgenden Beispiele zeigen auf, insbesondere am Beispiel von Rübenpressschnitzeln, dass bei Einsatz der erfindungsgemäßen Wirksubstanzen eine verminderte Buttersäurebildung (auch unter suboptimalen Temperaturbedingungen) und damit Verminderung der Aktivität von Clostridien erreicht wird. Darüber hinaus wurde die Wirksamkeit sowie die mindestens notwendige Einsatzkonzentration in mikrobiologischen Standardverfahren (minimale Hemmkonzentration in Hemmhoftests) für Clostridien und Listerien (u.a.) ermittelt:

| | | |
|---|---|---|
| Hopfen-β-Säuren gegen | Listerien: | 0,25 ppm |
| | Clostridien: | 10 ppm |
| Harzsäuren gegen | Listerien: | 35 ppm |
| | Clostridien: | 20 ppm |

Da die notwendige Mindestkonzentration an den erfindungsgemäßen Wirksubstanzen u.a. von zu hemmenden Organismen abhängt, können die oben angeführten Werte natürlich bei anderen Organismen unterschiedlich sein. Die notwendige Mindestkonzentration kann beispielsweise durch Hemmtests ermittelt werden.

### BEISPIEL 1:

Ein Silierhilfsmittel auf Hopfensäurenbasis für eine zu silierende Frischmasse (FM) von 1.000 kg wurde über die Verdünnung einer kommerziell erwerbbaren Lösung (BetaStab 10A; Mischung aus Harzen und Säureharzen von Hopfen: Wasser 80-90%, natürliche Beta-Säuren 9-11%, Kaliumhydroxide 1-3% und andere Hopfenkomponenten 1-5%) mit 10%igem Hopfen-ß-Säuren Gehalt hergestellten. Dazu wurden 1000 g dieser Lösung mit Wasser auf 2000 g aufgefüllt. Diese Lösung war für die sofortige Verwendung geeignet. Die Einbringung erfolgte über geeignete Sprühsysteme - wie sie beispielsweise für Ballenpressen der jeweiligen Hersteller angeboten werden. Für Ansätze in größerem Maßstab war die vorzubereitende Menge dieses Silierhilfsmittels hochzurechnen.

### BEISPIEL 2:

Ein Silierhilfsmittel auf Harzsäurenbasis für eine zu silierende Frischmasse (FM) von 1.000 kg wurde über die Verdünnung einer kommerziell erwerbbaren Lösung (PiStab 20A; Kalium-Seifenlösung aus Myristinsäure und einer Mischung aus Isomeren der Abietinsäure und Dehydroabietinsäure von Kiefern: Wasser 70-80%, natürliche Harzsäuren 15-17%, Myristinsäure 3-5%, Kaliumhydroxide 3-5% und andere Harzkomponenten 1-3%) mit 16%igem Harzsäurengehalt hergestellt. Dazu wurden 625 g dieser Lösung mit Wasser auf 2000 g aufgefüllt. Diese Lösung war für die sofortige Verwendung geeignet. Die Einbringung erfolgte über geeignete Sprühsysteme - wie sie beispielsweise für Ballenpressen der jeweiligen Hersteller angeboten werden Für Ansätze in größerem Maßstab war die vorzubereitende Menge dieses Silierhilfsmittels hochzurechnen.

### BEISPIEL 3:

Ein Silierhilfsmittel auf Hopfensäurenbasis für eine zu silierende Frischmasse (FM) von 1.000 kg, welches einen zu geringen Gehalt an vergärbaren Zuckern aufwies, wurde folgendermaßen hergestellt: 30 bis 50 kg Melasse (je nach vorliegendem Zuckergehalt des Rohmaterials) wurden mit Wasser 1:1 verdünnt und 1000 g BetaStab 10A eingerührt. Diese Mischung wurde sofort verwendet. Die Einbringung in das Siliergut erfolgte über geeignete Sprühsysteme - wie sie beispielsweise für Ballenpressen der jeweiligen Hersteller angeboten werden. Für Ansätze in größerem Maßstab war die vorzubereitende Menge dieses Silierhilfsmittels hochzurechnen.

### BEISPIEL 4:

Ein Silierhilfsmittel auf Harzsäurenbasis für eine zu silierende Frischmasse (FM) von 1.000 kg, welches einen zu geringen Gehalt an vergärbaren Zuckern aufwies, wurde folgendermaßen hergestellt: 30 bis 50 kg Melasse (je nach vorliegendem Zuckergehalt des Rohmaterials) wurden mit Wasser 1:1 verdünnt und 625 g PiStab 20A eingerührt. Diese Mischung wurde sofort verwendet. Die Einbringung in das Siliergut erfolgte über geeignete Sprühsysteme - wie sie beispielsweise für Ballenpressen der jeweiligen Hersteller angeboten werden. Für Ansätze in größerem Maßstab war die vorzubereitende Menge dieses Silierhilfsmittels hochzurechnen.

### BEISPIEL 5:

Ein kombiniertes Silierhilfsmittel auf Hopfensäurenbasis für eine zu silierende Frischmasse (FM) von 1.000 kg, welches einen zu geringen Gehalt an vergärbaren Zuckern aufweist, wurde folgendermaßen hergestellt: 30 bis 50 kg Melasse (je nach vorliegendem Zuckergehalt des Rohmaterials) wurden mit Wasser 1:1 verdünnt sowie 1000 g BetaStab 10A eingerührt. Zur zusätzlichen Unterdrückung von Hefen und zur Erhöhung der aeroben Stabilität erfolgte die Beimengung von 2 bis 4 kg Propionsäure. Diese Mischung wurde nun sofort verwendet. Die Einbringung in das Siliergut erfolgte über geeignete Sprühsysteme. Für Ansätze in größerem Maßstab war die vorzubereitende Menge dieses Silierhilfsmittels hochzurechnen.

### BEISPIEL 6:

Ein kombiniertes Silierhilfsmittel auf Harzsäurenbasis für eine zu silierende Frischmasse (FM) von 1.000 kg, welches einen zu geringen Gehalt an vergärbaren Zuckern aufwies, wurde folgendermaßen hergestellt: 30 bis 50 kg Melasse (je nach vorliegendem Zuckergehalt des Rohmaterials) wurden mit Wasser 1:1 verdünnt und 625 g PiStab 20A eingerührt. Zur zusätzlichen Unterdrückung von Hefen und zur Erhöhung der aeroben Stabilität erfolgte die Beimengung von 2 bis 4 kg Propionsäure. Diese Mischung wurde nun sofort verwendet. Die Einbringung in das Siliergut erfolgte über geeignete Sprühsysteme. Für Ansätze in größerem Maßstab war die vorzubereitende Menge dieses Silierhilfsmittels lediglich hochzurechnen.

### BEISPIEL 7:

Ein kombiniertes Silierhilfsmittel auf Harzsäurenbasis, Hopfensäurenbasis oder eine Kombination der beiden Wirkstofftypen für eine zu silierende Frischmasse (FM) von 1.000 kg, welches einen zu geringen Gehalt an vergärbaren Zuckern aufwies, wurde folgendermaßen hergestellt: 30 bis 50 kg Melasse (je nach vorliegendem Zuckergehalt des Rohmaterials) wurden mit Wasser 1:1 verdünnt und 625 g PiStab 20A eingerührt. Zur zusätzlichen Unterdrückung von Hefen und oder anderen Mikroorganismen zur Erhöhung der aeroben Stabilität erfolgte die Beimengung von Propionsäure/Essigsäure/Ameisensäure/Benzoesäure/Sorbinsäure oder den jeweiligen Salzen. Diese Mischung wurde nun sofort verwendet. Die Einbringung in das Siliergut erfolgte über geeignete Sprühsysteme Für Ansätze in größerem Maßstab war die vorzubereitende Menge dieses Silierhilfsmittels hochzurechnen.

### BEISPIEL 8:

Silierhilfsmittel wurden in ähnlicher Zusammensetzung wie in den Beispielen 1 bis 7 angegeben, allerdings mit unterschiedlichen Mengenverhältnissen von Harzsäuren und Hopfensäuren und anderen Silierhilfsmitteln, formuliert. Darüber hinaus wurde parallel zum Siliermitteleinsatz auf Hopfen bzw. Harzbasis Milchsäure- oder Propionsäurebakterien in das Siliergut eingebracht.

### BEISPIEL 9:

Ergebnisse aus Untersuchung zur Feststellung der minimalen Hemmkonzentration mithilfe des Microdilution-Tests bzw. Tecan-Tests bei Clostridien:

**Hopfen-β-Säuren gegen Gärschädlinge:**

| | |
|---|---|
| Listeria innocua | 0,25 ppm |
| Listeria ivanovii | 0,25 ppm |
| Listeria monocytogenes | 0,25 ppm |
| Costridium butyricum | 10 ppm |
| Costridium beijerinckii | 5 ppm |

**Harzsäuren gegen Gärschädlinge:**

| | |
|---|---|
| Listeria innocua | 20 ppm |
| Listeria ivanovii | 20 ppm |
| Listeria monocytogenes | 20 ppm |
| Costridium butyricum | 10 ppm |
| Costridium beijerinckii | 10 ppm |

Zur Darlegung des Unterschieds in der Wirksamkeit zwischen Gärschädlingen und erwünschten Milchsäurebakterien wurden zwei Stämme gegenübergestellt (Konzentrationen sind wesentlicher höher um die Milchsäurebakterien zu unterdrücken - über diesen Konzentrationsunterschied konnte eine Unterdrückung von Clostridien bei gleichzeitiger Selektionierung von Milchsäurebakterien erzielt werden):

**Harzsäuren im Test gegen Gärnützlinge (Milchsäurebakterien):**

| | |
|---|---|
| Pediococcus acidilactici | 1.000 ppm |
| Lactobacillus planatarum | 400 ppm |

**Hopfen-β-Säuren im Test gegen Gärnützlinge (Milchsäurebakterien) :**

| | |
|---|---|
| Enterococcus faecalis | 50 ppm |
| Enterococcus cassileflavus | 35 ppm |

Eine Kombination mit biologischen Silagestartern erwies sich als günstig. Durch den Einsatz von hopfenresistenten Stämmen konnte aufgrund der nicht besonders ausgeprägten Konzentrationsunterschiede zwischen Gärschädlingen und Milchsäurebakterien die Konzentration an Hopfensäuren erhöht werden, um Gärschädlinge effektiver zu bekämpfen. Da die Keimzahl von Milchsäurebakterien im zu silierenden Rohstoff in einigen Fällen höher war als die Keimzahl von Clostridien, konnte die Silierung auch ohne die Beigabe von hopfenresistenten Keimen erfolgreich durchgeführt werden.

## Patentansprüche

1. Verfahren zur Silierung und Konservierung von pflanzlichen Rohstoffen und Rohstoffgemischen, **dadurch gekennzeichnet, dass** die Silierung und Konservierung zumindest teilweise in Anwesenheit von mindestens einer zugesetzten organischen Säure und/oder deren Salz, Alkohol und Aldehyd durchgeführt wird, wobei die organische Säure ausgewählt ist aus der Gruppe bestehend aus Harzsäuren und Hopfensäuren.

2. Verfahren nach Anspruch 1, **dadurch gekennzeichnet, dass** die Silierung und Konservierung zusätzlich in Anwesenheit von zumindest einer Fettsäure und/oder deren Salz, Alkohol und Aldehyd durchgeführt wird.

3. Verfahren nach Anspruch 1 oder 2, **dadurch gekennzeichnet, dass** die zumindest eine Fettsäure ungesättigt oder gesättigt ist.

4. Verfahren nach Anspruch 2 oder 3, **dadurch gekennzeichnet, dass** die Fettsäure ausgewählt ist aus der Gruppe bestehend aus Kaprinsäure, Undecylensäure, Laurinsäure, Myristinsäure, Palmitinsäure, Margarinsäure, Stearinsäure, Arachinsäure, Behensäure, Lignocerinsäure, Cerotinsäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure und Cervonsäure.

5. Verfahren nach einem der Ansprüche 1 bis 4, **dadurch gekennzeichnet, dass** die Harzsäure ausgewählt ist aus der Gruppe bestehend aus Pimarsäure, Neoabietinsäure, Abietinsäure, Levopimarsäure und Palustrinsäure.

6. Verfahren nach einem der Ansprüche 1 bis 5, **dadurch gekennzeichnet, dass** die Harzsäure in Form eines Harzes, vorzugsweise eines natürlichen Harzes, noch mehr bevorzugt in Form von Kolophonium, zugesetzt wird.

7. Verfahren nach einem der Ansprüche 1 bis 6, **dadurch gekennzeichnet, dass** die Harzsäure und/oder Fettsäure als salzhaltige Lösung oder Suspension zugesetzt wird, vorzugsweise als Kaliumsalzlösung, insbesondere als 0,5 bis 35%ige Kaliumsalzlösung.

8. Verfahren nach Anspruch 6 oder 7, **dadurch gekennzeichnet, dass** das Harz als alkoholische Lösung oder Suspension, vorzugsweise als eine 1 bis 95%ige, insbesondere als eine 10 bis 80%ige Ethanollösung, zugesetzt wird.

9. Verfahren nach einem der Ansprüche 1 bis 8, **dadurch gekennzeichnet, dass** die Hopfensäure eine alpha-Hopfensäure ausgewählt ist aus der Gruppe bestehend aus Humulon, Isohumulon, Cohumulon, Adhumulon, Prähumulon, Posthumulon, Tetrahydroisohumulon und Tetrahydrodeoxyhumulon oder eine beta-Hopfensäure ausgewählt ist aus der Gruppe bestehend aus Lupulon, Colupulon, Adlupulon, Prälupulon, Postlupulon, Hexahydrocolupulon und Hexahydrolupulon ist.

10. Verfahren nach einem der Ansprüche 1 bis 9, **dadurch gekennzeichnet, dass** die Hopfensäure in Form eines Hopfenextrakts zugesetzt wird.

11. Verfahren nach einem der Ansprüche 1 bis 10, **dadurch gekennzeichnet, dass** vor und/oder während dem Silieren und Konservieren zumindest ein zuckerhaltiges Substrat zugesetzt wird.

12. Verfahren nach Anspruch 11, **dadurch gekennzeichnet, dass** das zuckerhaltige Substrat ausgewählt ist aus der Gruppe bestehend aus Melasse, Dicksaft, Dünnsaft und Kombinationen davon.

13. Verfahren nach Anspruch 11 oder 12, **dadurch gekennzeichnet, dass** das zuckerhaltige Substrat dem pflanzlichen Rohstoff oder Rohstoffgemisch in einer Menge von 0,1% bis 10%, vorzugsweise in einer Menge von 0,5% bis 8%, noch mehr bevorzugt in einer Menge von 1% bis 6%, zugesetzt wird.

14. Verfahren nach einem der Ansprüche 1 bis 13, **dadurch gekennzeichnet, dass** mindestens eine organische Säure und/oder deren Salz, Alkohol und Aldehyd dem pflanzlichen Rohstoff oder Rohstoffgemisch in einer Menge von 0,0001% bis 2%, vorzugsweise in einer Menge von 0,0005% bis 1%, noch mehr bevorzugt in einer Menge von 0,001% bis 0,5%, zugesetzt wird.

15. Verfahren nach einem der Ansprüche 1 bis 14, **dadurch gekennzeichnet, dass** die Silierung und Konservierung zumindest teilweise in Anwesenheit mindestens eines weiteren antimikrobiellen Wirkstoffs und/oder Stabilisators durchgeführt wird.

16. Verfahren nach Anspruch 15, **dadurch gekennzeichnet, dass** der antimikrobielle Wirkstoff und Stabilisator ausgewählt ist aus der Gruppe bestehend aus Essigsäure, Propionsäure, Benzoesäure, Sorbinsäure, Ameisensäure und deren Salze.

17. Verfahren nach einem der Ansprüche 1 bis 16, **dadurch gekennzeichnet, dass** die Silierung und Konservierung zumindest teilweise in Anwesenheit von zugesetzten Mikroorganismen, vorzugsweise prokaryotischen Mikroorganismen, insbesondere von Milchsäurebakterien, durchgeführt wird.

18. Verfahren nach Anspruch 17, **dadurch gekennzeichnet, dass** die Milchsäurebakterien im Wesentlichen resistent gegen Hopfensäuren und/oder Harzsäuren sind.

19. Verfahren nach einem der Ansprüche 1 bis 18, **dadurch gekennzeichnet, dass** der pflanzliche Rohstoff ausgewählt ist aus der Gruppe bestehend aus Getreide, vorzugsweise Roggen, Weizen und Mais, Leguminosen, Gras, Zuckerrüben, Früchten, vorzugsweise Traubentrester, Schlempe, Treber, Pressschnitzel, Maische und Teilen und Kombinationen davon.

20. Silierter und konservierter pflanzlicher Rohstoff oder Rohstoffgemisch erhältlich nach einem Verfahren nach einem der Ansprüche 1 bis 19.

21. Futtermittel umfassend silierten und konservierten pflanzlichen Rohstoff oder Rohstoffgemisch nach Anspruch 20.

## Claims

1. A method for silaging and for preserving vegetable raw materials and vegetable raw material mixtures, **characterized in that** the silaging and preserving is at least partially carried out in the presence of at least one added organic acid and/or a salt, alcohol and aldehyde thereof, wherein the organic acid is selected from the group consisting of resin acids and hop acids.

2. The method of claim 1, **characterized in that** the silaging and preserving is additionally carried out in the presence of at least one fatty acid and/or a salt, alcohol and aldehyde thereof.

3. The method of claim 1 or 2, **characterized in that** the at least one fatty acid is unsaturated or saturated.

4. The method of claim 2 or 3, **characterized in that** the fatty acid is selected from the group consisting of capric acid, undecylenic acid, lauric acid, myristic acid, palmitic acid, margaric acid, stearic acid, arachidic acid, behenic acid, lignoceric acid, cerotic acid, palmitoleic acid, oleic acid, elaidic acid, vaccenic acid, icosenoic acid, cetoleic acid, erucic acid, nervonic acid, linoleic acid, linolenic acid, arachidonic acid, timnodonic acid, clupanodonic acid, and cervonic acid.

5. The method of any one of claims 1 to 4, **characterized in that** the resin acid is selected from the group consisting of pimaric acid, neoabietic acid, abietic acid, levopimaric acid, and palustrinic acid.

6. The method of any one of claims 1 to 5, **characterized in that** the resin acid is added in the form of a resin, preferably a natural resin, even more preferred in the form of rosin.

7. The method of any one of claims 1 to 6, **characterized in that** the resin acid and/or fatty acid is added as a saline solution or suspension, preferably as a potassium salt solution, in particular as a 0.5% to 35% potassium salt solution.

8. The method of claim 6 or 7, **characterized in that** the resin is added as an alcoholic solution or suspension, preferably as a 1% to 95%, in particular as a 10% to 80% ethanol solution.

9. The method of any one of claims 1 to 8, **characterized in that** the hop acid is an alpha-hop acid selected from the group consisting of humulone, isohumulone, cohumulone, adhumulone, prehumulone, posthumulone, tetrahydroisohumulone, and tetrahydrodeoxyhumulone, or a beta-hop acid selected from the group consisting of lupolone, colupulone, adlupulone, prelupulone, postlupulone, hexahdydrocolupolone, and hexahydrolupulone.

10. The method of any one of claims 1 to 9, **characterized in that** the hop acid is added in the form of a hop extract.

11. The method of any one of claims 1 to 10, **characterized in that** before and/or during silaging und preserving at least one sugar-containing substrate is added.

12. The method of claim 11, **characterized in that** the sugar-containing substrate is selected from the group consisting of molasses, thick juice, thin juice, and combinations thereof.

13. The method of claim 11 or 12, **characterized in that** the sugar-containing substrate is added to the raw material from plants or raw material mixture in an amount of 0.1% to 10%, preferably in an amount of 0.5% to 8%, even more preferred in an amount of 1% to 6%.

14. The method of any one of claims 1 to 13, **characterized in that** at least one organic acid and/or the salt, alcohol and aldehyde thereof, is added to the raw material from plants or raw material mixture in an amount of 0.0001% to 2%, preferably in an amount of 0.0005% to 1%, even more preferred in an amount of 0,001% to 0.5%.

15. The method of any one of claims 1 to 14, **characterized in that** the silaging and preserving is at least partially carried out in the presence of at least one other antimicrobial substance and/or stabilizer.

16. The method of claim 15, **characterized in that** the antimicrobial substance and stabilizer is selected from the group consisting of acetic acid, propionic acid, benzoic acid, sorbic acid, formic acid, and the salts thereof.

17. The method of any one of claims 1 to 16, **characterized in that** the silaging and preserving is at least partially carried out in the presence of added microorganisms, preferably prokaryotic microorganisms, in particular of lactic acid bacteria.

18. The method of claim 17, **characterized in that** the lactic acid bacteria are essentially resistant to hop acids and/or resin acids.

19. The method of any one of claims 1 to 18, **characterized in that** the vegetable raw material is selected from the group consisting of grains, preferably of rye, wheat, and corn, leguminous plants, grass, sugar beet, fruits, preferably grape marc, vinasse, spent grains, pressed pulp, mash, and parts and combinations thereof.

20. The silaged and preserved vegetable raw material or vegetable raw material mixture obtainable by a process of any one of claims 1 to 19.

21. An animal feed comprising the silaged and preserved vegetable raw material or vegetable raw material mixture of claim 20.

## Revendications

1. Procédé d'ensilage et de conservation de matières premières végétales et de mélanges de matières premières végétales, **caractérisé en ce que** l'ensilage et la conservation sont réalisés au moins partiellement en présence d'au moins un acide organique ajouté et/ou son sel, alcool et aldéhyde, l'acide organique étant choisi dans le groupe constitué des acides résiniques et des acides de houblon.

2. Procédé selon la revendication 1, **caractérisé en ce que** l'ensilage et la conservation sont réalisés en plus en présence d'au moins un acide gras et/ou son sel, alcool et aldéhyde.

3. Procédé selon la revendication 1 ou 2, **caractérisé en ce que** le au moins un acide gras est insaturé ou saturé.

4. Procédé selon la revendication 2 ou 3, **caractérisé en ce que** l'acide gras est choisi dans le groupe constitué de l'acide caprique, l'acide undécylénique, l'acide laurique, l'acide myristique, l'acide palmitique, l'acide margarique, l'acide stéarique, l'acide arachidique, l'acide béhénique, l'acide lignocérique, l'acide cérotinique, l'acide palmitoléique, l'acide oléique, l'acide élaïdique, l'acide vaccénique, l'acide icosénique, l'acide cétoléique, l'acide érucique, l'acide nervonique, l'acide linolique, l'acide linolénique, l'acide arachidonique, l'aide timnodonique, l'acide clupanodonique et l'acide cervonique.

5. Procédé selon l'une des revendications 1 à 4, **caractérisé en ce que** l'acide résinique est choisi dans le groupe constitué de l'acide pimarique, l'acide néoabiétique, l'acide abiétique, l'acide lévopimarique et l'acide palustrique.

6. Procédé selon l'une des revendications 1 à 5, **caractérisé en ce que** l'acide résinique est ajouté sous la forme d'une résine, de préférence d'une résine naturelle, encore plus préférentiellement sous la forme de colophane.

7. Procédé selon l'une des revendications 1 à 6, **caractérisé en ce que** l'acide résinique et/ou l'acide gras est ajouté sous forme de solution ou de suspension contenant un sel, de préférence sous forme de solution de sel de potassium, en particulier sous forme de solution de sel de potassium de 0,5 à 35 %.

8. Procédé selon la revendication 6 ou 7, **caractérisé en ce que** la résine est ajoutée sous forme de solution ou suspension alcoolique, de préférence sous la forme d'une solution éthanolique de 1 à 95 %, en particulier de 10 à 80 %.

9. Procédé selon l'une des revendications 1 à 8, **caractérisé en ce que** l'acide de houblon est un acide de houblon alpha choisi dans le groupe constitué de l'humulone, de l'isohumulone, de la cohumulone, de l'adhumulone, de la préhumulone, de la posthumulone, de la tétrahydroisohumulone et de la tétrahydrodésoxyhumulone ou d'un acide de houblon bêta, choisi dans le groupe constitué de la lupulone, de la colupulone, de l'adlupulone, de la prélupulone, de la postlupulone, de l'hexahydrocolupulone et de l'hexahydrolupulone.

10. Procédé selon l'une des revendications 1 à 9, **caractérisé en ce que** l'acide de houblon est ajouté sous la forme d'un extrait de houblon.

11. Procédé selon l'une des revendications 1 à 10, **caractérisé en ce qu'**au moins un substrat contenant du sucre est ajouté avant et/ou après l'ensilage et la conservation.

12. Procédé selon la revendication 11, **caractérisé en ce que** le substrat contenant du sucre est choisi dans le groupe constitué de la mélasse, du sirop concentré, du sirop dilué et des combinaisons de ceux-ci.

13. Procédé selon la revendication 11 ou 12, **caractérisé en ce que** le substrat contenant du sucre est ajouté à la matière première végétale ou au mélange de matières premières végétales en une quantité de 0,1 % à 10 %, de préférence en une quantité de 0,5 % à 8 %, encore plus préférentiellement en une quantité de 1 % à 6 %.

14. Procédé selon l'une des revendications 1 à 13, **caractérisé en ce qu'**au moins un acide organique et/ou son sel, alcool et aldéhyde est ajouté à la matière première végétale ou au mélange de matières premières végétales en une quantité de 0,0001 % à 2 %, de préférence en une quantité de 0,0005 % à 1 %, encore plus préférentiellement en une quantité de 0,001 % à 0,5 %.

15. Procédé selon l'une des revendications 1 à 14, **caractérisé en ce que** l'ensilage et la conservation sont réalisés au moins partiellement en présence d'au moins un autre principe actif antimicrobien et/ou stabilisant.

16. Procédé selon la revendication 15, **caractérisé en ce que** le principe actif antimicrobien et le stabilisant sont choisis dans le groupe constitué de l'acide acétique, de l'acide propionique, de l'acide benzoïque, de l'acide sorbique, de l'acide formique et leurs sels.

17. Procédé selon l'une des revendications 1 à 16, **caractérisé en ce que** l'ensilage et la conservation sont réalisés au moins partiellement en présence de microorganismes ajoutés, de préférence de microorganismes procaryotes, en particulier de lactobacilles.

18. Procédé selon la revendication 17, **caractérisé en ce que** les lactobacilles sont essentiellement résistants aux acides de houblon et/ou aux acides résiniques.

19. Procédé selon l'une des revendications 1 à 18, **caractérisé en ce que** la matière première végétale est choisie dans le groupe constitué des céréales, de préférence du seigle, du blé, et du maïs, des légumineuses, des graminées, des betteraves sucrières, des fruits, de préférence du marc de raisin, de la vinasse, de la drêche, de la pulpe pressée, du moût, et des parties et combinaisons de ceux-ci.

20. Matière première végétale ou mélange de matières premières végétales, ensilé et conservé, pouvant être obtenu d'après un procédé selon l'une des revendications 1 à 19.

21. Aliments pour animaux, comprenant une matière première végétale ou un mélange de matières premières végétales, ensilé et conservé selon la revendication 20.
